# EUROPÄISCHE PATENTSCHRIFT

(11) **EP 0 941 472 B1**
(45) Veröffentlichungstag und Bekanntmachung des Hinweises auf die Patenterteilung: **04.09.2002**
(21) Anmeldenummer: 97949933.2
(22) Anmeldetag: 17.11.1997
(51) Int. Cl.: G01N 27/07

(54) **VERFAHREN ZUR BESTIMMUNG DER LEITFÄHIGKEITSVERTEILUNG IN STRÖMENDEN MEDIEN UNTER VERWENDUNG EINE GITTERSENSORS**
PROCEDURE FOR DETERMINING THE CONDUCTIVITY DISTRIBUTION IN FLOW MEDIA USING A GRID SENSOR
PRCEDURE POUR DETERMINER LA DISTRIBUTION DE LA CONDUCTIVITE DANS DES MILIEUX EN ECOULEMENT EN UTILISANT UN CAPTEUR DE GRILLE

(30) Priorität: 27.11.1996 DE 19649011
(43) Veröffentlichungstag der Anmeldung: 15.09.1999
(73) Patentinhaber: Forschungszentrum Rossendorf e.V., 01328 Dresden (DE)
(72) Erfinder: PRASSER, Horst-Michael, D-01324 Dresden (DE); ZSCHAU, Jochen, D-01324 Dresden (DE); BÖTTGER, Arnd, D-01279 Dresden (DE)
(86) Internationale Anmeldenummer: DE9702683
(87) Internationale Veröffentlichungsnummer: WO98023947

(56) Entgegenhaltungen:
- FR-A- 2 614 104
- US-A- 4 644 263
- US-A- 4 656 427
- US-A- 4 833 413
- US-A- 5 210 499
- A. V. PLOSHINSKII: "PRIMARY SENSORS WITH HYDRODYNAMIC SMOOTHING FOR CONDUCTOMETRY ON TURBULENT FLOWS" MEASUREMENT TECHNIQUES., Bd. 29, Nr. 3, 1986, NEW YORK US, Seiten 250-252, XP002061552

## Beschreibung

Die Erfindung betrifft ein Verfahren zur Bestimmung der Verteilung der elektrischen Leitfähigkeit von strömenden Medien unter Verwendung eines Gittersensors, insbesondere für den Einsatz in der Verfahrens- und Kraftwerkstechnik, wobei die elektrische Leitfähigkeit vorwiegend als Maß für weitere physikalische oder chemische Eigenschaften (z.B. volumetrischer Gasanteil, Konzentration, Stoffart, usw.) der Flüssigkeit oder als Indikator für die Phasenverteilung über den Meßquerschnitt eines Mehrphasenmediums dient.

Für die Bestimmung der Eigenschaften von Flüssigkeiten und Mehrphasengemischen, z.B. des volumetrischen Gasanteils, wird verbreitet die Messung der elektrischen Leitfähigkeit verwendet. Dazu wird sowohl Gleich- als auch Wechselspannungsanregung des zu messenden Mediums eingesetzt, die Auswertung erfolgt durch Bestimmung des rein ohmschen bzw. komplexen Widerstandes. Vorzugsweise werden dazu sowohl bei Laboreinrichtungen als auch bei großtechnischen Anwendungen draht- oder flächenförmige Elektroden, die parallel oder konzentrisch angeordnet sind, in das zu messende Medium eingebracht. Die Leitfähigkeit wird dann lokal z.B. mit Nadelsonden [DE-PS 3201799] oder integral zwischen flächenförmigen Elektroden [DE-PS 4041160] gemessen. Zur Bestimmung der Verteilung der lokalen elektrischen Leitfähigkeit über einen Querschnitt sind diese Methoden wenig geeignet.

Für die Bestimmung der Eigenschaftsverteilung von Flüssigkeiten oder Mehrphasensystemen über einen bestimmten Querschnitt werden daher häufig tomographische Meßmethoden eingesetzt. Neben dem Einsatz von Licht- oder Teilchenstrahlung mit interferometrischen bzw. holographischen Auswertemethoden hat sich besonders die Anwendung elektrischer Tomographieverfahren unter Einbeziehung sowohl von elektrischen Leitfähigkeitsmessungen als auch kapazitiven Meßmethoden bewährt. Neben berührungslosen Verfahren mit Elektroden am Rand des Strömungskanals haben sich Methoden etabliert, bei denen Elektroden gitterförmig quer zur Strömungsrichtung des Mediums (sogenannte Wire-Mesh-Sensoren) angeordnet werden.

Bei einem an der Universität Hannover entwickelten Verfahren [M. Boden, N.Reinecke, D. Mewes: "Measurement of two-dimensional phase distributions using a wire-mesh sensor", Proc. ECAPT, Oporto, Portugal, 1994 pp. 155-162] werden parallele Drähte in drei Ebenen senkrecht zur Strömungsrichtung des Mediums in dem zu messenden Querschnitt angeordnet und sequentiell immer die Leitfähigkeit zwischen zwei parallelen benachbarten Drähten einer Ebene gemessen. Die Drähte benachbarter Ebenen verlaufen zueinander in einem Winkel von 60°. Nach Ausführung aller Messungen zwischen je zwei parallelen benachbarten Drähten aller drei Ebenen liegen die Projektionen der Leitfähigkeitsverteilung in den drei, durch die Orientierung des Drahtgitters vorgegebenen Richtungen vor. Daraus wird die elektrische Leitfähigkeitsverteilung mittels eines umfangreichen tomographischen Rekonstruktionsalgoritmus ermittelt. Die mathematische Nachberechnung der Meßergebnisse schränkt die praktische Handhabbarkeit der Anzahl der Drähte und die erreichbare Frequenz zur Bestimmung von Leitfähigkeitsverteilungen über einen bestimmten Querschnitt stark ein.

Aus US-PS 4,644,263 ist ein Sensor bekannt, der aus zwei Ebenen von parallelen Elektroden besteht, wobei die Elektroden der beiden Ebenen in einem Winkel von 90° angeordnet sind. Die Elektroden der einen Ebene werden als Sende-, die der anderen Ebene als Empfangselektroden benutzt. Die Sendeelektroden werden mit einem Multiplexer sequentiell angesteuert. Die Anwesenheit der leitfähigen Phase wird als binäre Information ermittelt. Mittels eines zweiten Multiplexers wird für jede Empfangselektrode geprüft, ob der Stromeintrag auf die Empfangselelektrode größer oder kleiner als eine vorgegebene Schwelle ist. Die Ergebnisse werden summiert, man erhält ein Verhältnis von digitalten Entscheidungen über den untersuchten Querschnitt. In US-PS 5,210,499 wird die in US-PS 4,644,263 beschriebene Einrichtung dahingehend modifiziert, daß eine Widerstandsmessung erfolgt.

Der vorliegenden Erfindung liegt die Aufgabe zugrunde, die Messung der Verteilung der Leitfähigkeit des Strömungsmediums mit Hilfe von Gittersensoren ohne den Einsatz von tomographischen Rekonstruktionsalgorithmen zu bestimmen.

Erfindungsgemäß wird diese Aufgabe mit den in den Patentansprüchen dargestellten technischen Mitteln gelöst.
Mit der Erfindung ist die Messung der Verteilung der elektrischen Leitfähigkeit des Strömungsmediums innerhalb des vom Gittersensor begrenzten Querschnitts mit hoher Auflösung und Meßfolge möglich. Die erhaltenen Meßwerte repräsentieren die lokalen Leitfähigkeitswerte direkt und erfordern keine zusätzliche Nachberechnung mittels tomographischen Rekonstruktionsalgorithmen. Mit einer Dreiebenenanordnung ist zusätzlich die Verfolgung der Bewegung von Inhomogenitäten im Strömungsmedium, die sich in der Änderung der Leitfähigkeit manifestieren, in Strömungsrichtung möglich. Für den Fall einer Zweiphasenströmung kann so die Messung der Geschwindigkeit von Gaspartikeln vorgenommen werden. Mit einer Reihenschaltung von mehreren Dreiebenenanordnung läßt sich der zu betrachtende Volumenabschnitt beliebig erweitern.

Zum besseren Verständnis wird die Erfindung nachfolgend anhand von Ausführungsbeispielen näher erläutert.

Zur Ansteuerung und Auswertung dieser Gittersensoren werden nachfolgende elektronische Funktionsgruppen eingesetzt. Dies sind im einzelnen
- Erregerspannungserzeugung und -ansteuerung,
- Strom-Spannungswandler und Signalkonditionierung,
- Sample and Hold-Schaltung,
- Analog/Digital-Wandler,
- Statischer Meßwertspeicher,
- Mikrokontroller,
- Steuereinheit.

Der Meßvorgang wird in eine der Anzahl der Erregerelektroden entsprechende Zahl von äquivalenten Meßzyklen unterteilt und durch eine Steuerschaltung vorzugsweise einen ASIC gesteuert.
Ein von außen an den ASIC angelegter in seiner Frequenz programmierbarer Takt bestimmt die Dauer eines Meßzyklus. Dazu wird der Meßzyklus in n Teilabschnitte unterteilt, mit denen der zeitliche Verlauf der Signale zur Steuerung der Meß- und Auswertefunktionen programmiert werden kann.
Die Meßzyklen für die einzelnen Erregerelektroden werden durch einen Zähler zeitlich nacheinander gestartet. Der Meßvorgang kann nach einer beliebigen Zahl von Meßzyklen abgebrochen und neu gestartet werden.
Für jeden Meßzyklus wird ein symmetrischer bipolarer Erreger-Rechteckimpuls (|+U_{Anst}| = |-U_{Anst}|) mittels Analogschalter oder eines mit einer Offsetspannung am Pluseingang beaufschlagtem Operationsverstärker von den Betriebspannungen abgeleitet und über stromgegengekoppelte Verstärker an die Erregerelektroden nacheinander zeitversetzt angelegt, wobei alle nicht angesteuerten Erregerelektroden niederohmig mit Nullpotential verbunden sind. Der zeitliche Mittelwert der Erreger-Rechteckspannung ist Null und damit die Ansteuerung der Gitterelektroden zur Vermeidung von Elektrolyseeffekten gleichspannungsfrei.
Da der Sensorgrundkörper mit Nullpotential verbunden wird, ist der Sensor potentialmäßig eindeutig definiert.
Die Stromeinträge auf die Elektroden der Empfängerebene werden von Strom/Spannungswandlern mit niedrigem Eingangswiderstand in Spannungen umgewandelt.
Die Auswertung der Stromeinträge auf die Empfängerelektroden erfolgt erst nach dem Abklingen der Einschwingvorgänge für alle Elektroden der Empfängerebene gleichzeitig. Dazu werden die Spannungssignale aller Auswertekanäle am Ausgang der Signalkonfektionierung mit Sample and Hold Schaltungen bis zum Auswertungsende festgehalten. Die mittlere Ebene ist als Erreger geschaltet und wirkt gleichzeitig auf beide benachbarten Empfängerebenen.

Die Auswertung der in Form von elektrischen Spannungen gewonnenen Meßsignale kann auf verschiedene Weise erfolgen. Nachfolgend sind zwei Möglichkeiten beschrieben :
1. Nach einer für die anschließenden Sample and Hold-Schaltungen geeigneten Signalkonfektionierung erfolgt eine Digitalisierung der Signalspannungen. Der Übergang von dem Sample-Zustand in den Hold-Zustand geschieht für alle Sample and Hold-Schaltungen gleichzeitig. Die erhaltenen digitalisierten Signalspannungen können dann mittels Mikroprozessoren vorverdichtet und zwischengespeichert werden. Bei der Vorverdichtung werden die Meßergebnisse auf die Meßwerte der einzelnen Phasen des durchströmenden Mediums bezogen, normiert ausgewertet. Dazu wird zunächst die Leitfähigkeit der Einzelphasen (MW₁ und MW₂) während einer Eichung gemessen und anschließend werden die Meßwerte MW darauf bezogen, indem ein errechneter Meßwert MWₑᵣ = MW / MW - MW / MW gebildet wird.
   Bei der Auswertung kann eine ortsabhängige Bewertung der Meßwerte (Ausgleich von Effekten in Randzonen des Sensors) berücksichtigt werden.
2. Die in Signalkonfektionierschaltungen auf bereiteten Signalspannungen werden mit Referenzspannungen verglichen, die der Leitfähigkeit der Phase des Mehrphasenmediums mit der geringeren Leitfähigkeit entsprechen. Dabei ergibt sich eine duale unmittelbare Aussage über den Zustand der augenblicklichen Phase an der gemessenen Stelle. Hierbei ist es jedoch notwendig, die Referenzspannungen in angemessenen Abständen über eine Meßeinheit bestehend aus A/D-Wandler, Mikroprozessor und D/A-Wandler in Abhängigkeit von eventuellen Temperatur-, Konzentrationsänderungen usw. ortsabhängig unter Berücksichtigung der Randzoneneffekte zu ermitteln und nachzuführen.

Während die zweite Auswertemöglichkeit vorwiegend für Zweiphasensysteme einsetzbar ist, eignet sich erstere für universelle Auswertungen.
Für die Verfolgung der Bewegung von Inhomogenitäten im Strömungsmedium, die sich in der Änderung der Leitfähigkeit in Strömungsrichtung manifestieren, z.B. der Messung der Geschwindigkeit oder der Größe von Gaspartikeln, werden mehrere solche Dreiebenensensoren hintereinander angeordnet und die Meßwertauswertungen synchronisiert.

## Patentansprüche

1. Verfahren zur Bestimmung der Verteilung der elektrischen Leitfähigkeit von strömenden Medien unter Verwendung eines aus Elektroden in Form von elektrisch Leitfähigen Gitterstäben bzw. Drähten, die in drei Ebenen parallel zueinander und sowohl gegenüber ihrer Halterung als auch gegeneinander isoliert angeordnet sind, bestehenden Gittersensors, bei dem die Elektroden in drei Ebenen zueinander in einem Winkel von vorzugsweise 90° angeordnet sind und die mittlere Ebene als Erregerebene mit einem Impulsgenerator sowie die weiteren Ebenen als Empfängerebenen mit einer Auswerteelektronik gekoppelt sind,
**dadurch gekennzeichnet, daß**
- die Elektroden der Erregerebene nacheinander mit einem symmetrischen bipolaren Rechteckimpuls angesteuert werden, wobei alle nicht angesteuerten Elektroden niederohmig mit Nullpotential verbunden sind,
- die Bestimmung der örtlichen Leitfähigkeit in unmittelbarer Umgebung des Kreuzungspunkts von jeweils einer Erregerelektrode und einer Empfängerelektrode durch Messung des Stromeintrags auf die Empfängerelektrode im Moment der elektrischen Anregung der Erregerelektrode erfolgt,
- die Messung des Stromeintrags als Maß der örtlichen Leitfähigkeit in unmittelbarer Umgebung aller Kreuzungspunkte zwischen jeweils einer Erregerelektrode und allen Empfängerelektroden gleichzeitig erfolgt,
- die Anregung der einzelnen Erregerelektroden zeitlich nacheinander erfolgt und die gemessenen Stromeinträge an allen Kreuzungspunkten zu einer Leitfähigkeitsverteilung über den erfaßten Strömungsquerschnitt zusammengefügt werden.

2. Verfahren nach Anspruch 1, **dadurch gekennzeichnet, daß** die Messung erst nach Abklingen der elektrischen Einschwingvorgänge an den Elektroden durch die Auswerteelektronik erfolgt.

## Claims

1. Procedure for determining the conductivity distribution in flow media using a grid sensor comprising electrodes in the form of conductive grid rods or wires arranged in three planes parallel to each other and insulated both from their mounts and from each other, in which (grid sensor) the electrodes are arranged in three planes preferably at an angle of 90° to each other, the middle plane as an exciter plane with a pulse generator and the other planes as receptor planes being coupled with an electronic analyzer,
**characterized in that**
- the electrodes of the exciter plane are triggered serially with a symmetrical bipolar square-wave pulse, whereby all non-triggered electrodes are connected at low-resistance with zero potential,
- the definition of the local conductivity takes place in the immediate vicinity of the point of intersection of one exciter electrode and one receptor electrode, respectively, by measuring the current input to the receptor electrode at the moment of electric excitation of the exciter electrode,
- the measurement of the current input as a measure of the local conductivity in the immediate vicinity of all points of intersection between one exciter electrode and all receptor electrodes, respectively, takes place simultaneously,
- the excitation of the individual exciter electrodes takes place successively and the measured current inputs at all points of intersection are joined into one conductivity distribution throughout the measured flow diameter.

2. Procedure according to Claim 1, **characterized in that** the measurement first takes place after decay of the electrical transient reactions on the electrodes by the electronic analyzer.

## Revendications

1. Procédure pour déterminer la distribution de la conductivité dans des milieux en écoulement en utilisant un capteur de grille composé d'électrodes sous forme de barres de grille ou de fils conducteurs disposés parallèlement sur trois différents plans et isolés les uns par rapport aux autres et par rapport à leur support; les électrodes du capteur sont disposées sur trois différents plans et forment un angle de 90° de préférence les unes par rapport aux autres; le plan central représente le plan d'excitation qui est couplé à un générateur d'impulsions et les autres plans représentent les plans récepteurs qui sont couplés à un système électronique d'évaluation; procédure **caractérisée par le fait que**
- les électrodes du plan d'excitation sont pilotées les unes après les autres par une impulsion carrée bipolaire symétrique, toutes les électrodes non pilotées étant connectées à basse impédance au potentiel zéro,
- la détermination de la conductivité locale est effectuée à proximité immédiate du point d'intersection de respectivement une électrode excitatrice et d'une électrode réceptrice par mesure du courant recueilli dans l'électrode réceptrice au moment de l'excitation électrique de l'électrode excitatrice,
- la mesure du courant recueilli est réalisée à proximité immédiate de tous les points d'intersection de respectivement une électrode excitatrice et de toutes les électrodes réceptrices en même temps comme référence de la conductivité locale
- l'excitation des différentes électrodes excitatrices est effectuée une par une et que les courants recueillis mesurés à tous les points d'intersection sont réunis pour déterminer la distribution de la conductivité de la section d'écoulement examinée.

2. Procédure suivant la revendication 1, **caractérisée par le fait que** la mesure n'est effectuée par l'électronique d'évaluation qu'après l'amortissement des phénomènes transitoires électriques sur les électrodes.
